Europäisches Patentamt

European Patent Office

Office européen des brevets

(19)

(11) Veröffentlichungsnummer: **0 023 522**
**A1**

(12) # EUROPÄISCHE PATENTANMELDUNG

(21) Anmeldenummer: **79102838.4**

(22) Anmeldetag: **07.08.79**

(51) Int. Cl.³: **C 03 B 5/06,** C 03 B 5/42,
C 03 B 9/02

(43) Veröffentlichungstag der Anmeldung: **11.02.81**
**Patentblatt 81/6**

(84) Benannte Vertragsstaaten: **AT BE FR GB IT SE**

(71) Anmelder: **Maschinenfabrik Reinhausen Gebrüder Scheubeck GmbH & Co. KG., Falkensteinstrasse 8, D-8400 Regensburg (DE)**

(72) Erfinder: **Fend, Fritz M., Thurmayerstrasse 11, D-8400 Regensburg (DE)**

(54) **Wärmestrahlungsschutz.**

(57) Wärmestrahlungsschutz (3) für Arbeitsöffnungen (2) von Schmelzöfen, insbesondere von Glasschmelzöfen (1). Vor der Arbeitsöffnung (2) des Schmelzofens (1) ist eine in Rotation versetzbare Scheibe (3) angeordnet. Die Scheibe (3) besitzt mindestens eine Öffnung (5), welche sich beim Rotieren der Scheibe (3) an der Arbeitsöffnung (2) des Schmelzofens (1) vorbeibewegt.

EP 0 023 522 A1

0023522

- 1 -

<u>Wärmestrahlungsschutz</u>

Die Erfindung betrifft einen Wärmestrahlungsschutz für Arbeitsöffnungen von Schmelzöfen, insbesondere von Glasschmelzöfen.

Durch die aus Arbeitsöffnungen von Schmelzöfen austretende intensive Wärmestrahlung wird das Arbeiten an derartigen Schmelzöfen sehr erschwert, wobei auch gesundheitliche Schäden dadurch auftreten können, daß das am Schmelzofen arbeitende Personal an einer Körperseite der erheblichen Wärmestrahlung des Schmelzofens ausgesetzt ist, während die dem Schmelzofen abgewandte Körperseite nur der normalen Raumtemperatur und möglicherweise noch der durch eine unzureichend arbeitende Belüftungsanlage erzeugten Zugluft ausgesetzt ist.

Es wäre denkbar, die Arbeitsöffnungen von Schmelzöfen zur Verringerung der austretenden Wärmestrahlung mit Klappen oder Türen aus feuerfestem bzw. wärmebeständigem Material zu verschließen. Dies hat jedoch den Nachteil, daß derartige Klappen oder Türen eine ständige Beobachtung der Schmelze im Schmelzofen nicht möglich machen, sondern für diesen Zweck ständig geöffnet und geschlossen werden müßten. Durch die große Helligkeit der Schmelze wäre dann auch bei geöffneter Klappe oder Tür eine Beobachtung der Schmelze ohne weitere Schutzmittel, wie beispielsweise Schutzbrillen mit gefärbten Gläsern usw. nicht möglich.

Es wurden auch bereits Versuche durchgeführt, an den Arbeits-

- 2 -                           0023522

öffnungen von Schmelzöfen Wärmestrahlungsschutzvorrichtungen aus besonders eingefärbten Gläsern vorzusehen. Diese
Versuche führten ebenfalls nicht zu einem zufriedenstellenden Ergebnis, da die auf derartige Gläser auftreffende
Wärmestrahlung sehr rasch zu einer Zerstörung führte.

Der Erfindung liegt die Aufgabe zugrunde, einen Wärmestrahlungsschutz für Arbeitsöffnungen von Schmelzöfen, insbesondere
von Glasschmelzöfen aufzuzeigen, der einfach aufgebaut ist
und eine wirksame Reduzierung der aus einer Arbeitsöffnung
austretenden Wärmestrahlung gewährleistet, wobei eine ständige Beobachtung der Schmelze im Schmelzofen möglich ist.

Zur Lösung dieser Aufgabe ist ein Wärmestrahlungsschutz der
eingangs geschilderten Art erfindungsgemäß gekennzeichnet
durch wenigstens eine vor einer Arbeitsöffnung angeordneten
und rotierend angetriebenen Scheibe, die wenigstens eine
Öffnung aufweist, welche sich an der Arbeitsöffnung vorbeibewegt.

Durch entsprechende Wahl des Durchmessers der Öffnung in
der Scheibe, der Anzahl derartiger Öffnungen in der Scheibe
sowie der Drehgeschwindigkeit dieser Scheibe läßt sich
die Verringerung der aus einer Arbeitsöffnung eines Schmelzofens austretenden Wärmestrahlung optimal einstellen, wobei
auch die Helligkeit der durch die Öffnung bzw. Öffnungen
in der rotierenden Scheibe zu betrachtenden Schmelze so stark
reduziert wird, daß eine ständige Beobachtung dieser Schmelze
ohne besondere Hilfsmittel möglich ist.

Weiterbildungen der Erfindung sind in den Unteransprüchen
beschrieben.

Die Erfindung wird im folgenden anhand der Figuren an einem
Ausführungsbeispiel näher erläutert. Es zeigen:

    Figur 1 in schematischer Seitendarstellung einen
    Teil eines Glasschmelzofens zusammen mit einer
    Strahlungsschutzeinrichtung gemäß der Erfindung;
    Figur 2 einen Schnitt entlang der Linie I-I der

- 3 -

0023522

Figur 1;

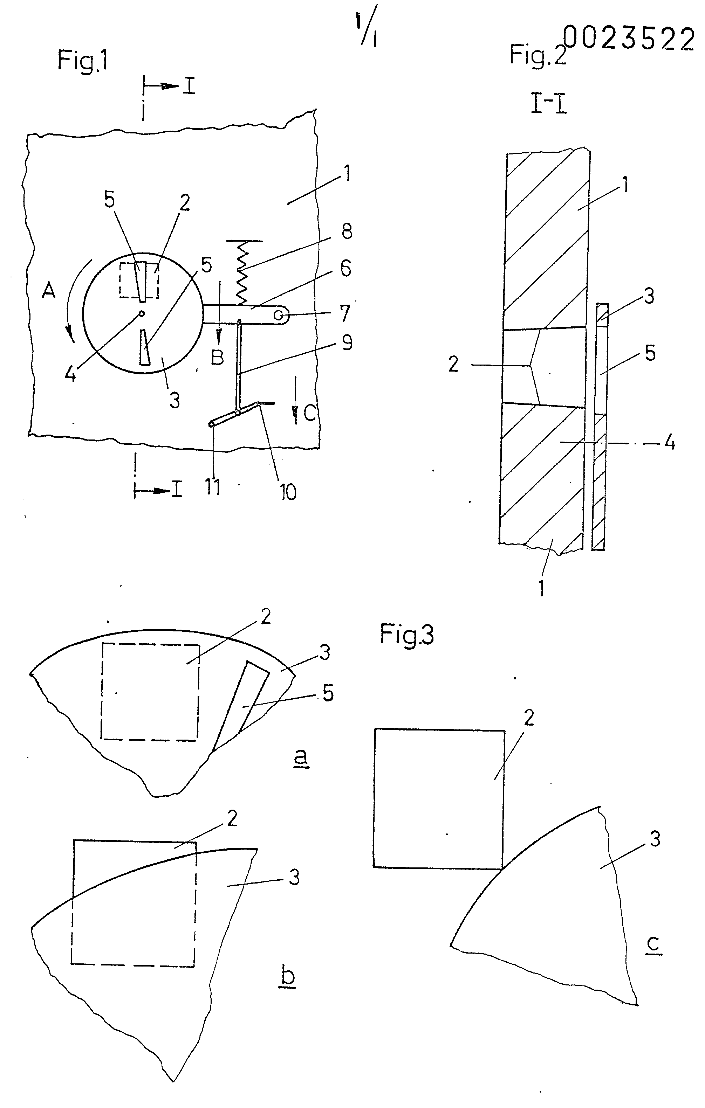

Figur 3a-3c verschiedene Stellungen der als
Strahlenschutz dienenden rotierenden Scheibe
bei der Strahlenschutzeinrichtung gemäß Figur 1.

In den Figuren ist 1 die seitliche Begrenzungswandung eines
Glasschmelzofens, wobei diese Begrenzungswandung der einfacheren Darstellung wegen nur teilweise gezeigt ist. Im
Inneren des Glasschmelzofens befindet sich in an sich bekannter Weise - was im einzelnen nicht dargestellt ist -
das verflüssigte Glas, welches mit einem geeigneten Werkzeug,
z.B. Glasbläserpfeife, durch eine Öffnung 2 in der Begrenzungswandung 1 entnommen werden kann.

An der Außenseite der Begrenzungswandung 1 also an der Außenseite des Glasschmelzofens ist vor der Öffnung 2 eine Scheibe
3 angeordnet, die um ihren Mittelpunkt 4 mit einem nicht näher
dargestellten Antriebsmotor, z.B. einem Elektromotor, in
Richtung des Pfeiles A (Fig. 1) rotierend angetrieben wird.

Die Scheibe 3, die beispielsweise aus Metallblech hergestellt
ist und bei einer bevorzugten Ausführungsform der Erfindung
einen Durchmesser von 400 mm aufweist, ist mit zwei radial
verlaufenden Schlitzen 5 versehen, die um den Mittelpunkt 4
um 180$^{\circ}$ versetzt angeordnet sind, wobei jeder Schlitz 5 vorzugsweise eine Länge aufweist, die nur geringfügig kürzer
ist als der Radius der Scheibe 3.

Die Schlitze 5 sind dabei keilförmig in der Weise ausgebildet,
daß die Breite jedes Schlitzes 5 vom Mittelpunkt 4 zum äußeren
Rand der Scheibe 3 hin zunimmt. Bei einer bevorzugten Ausführungsform der Erfindung beträgt die Länge jedes Schlitzes
annähernd 200 mm und die maximale Breite jedes Schlitzes
etwa 5 mm.

Die Scheibe 3 ist weiterhin so an der Begrenzungswandung 1
des Glasofens befestigt, daß sie aus einer ersten Stellung,
in der die Scheibe 3 die Öffnung 2 des Glasofens abdeckt und
in der die gedachte Verlängerung der Öffnung 2 zum Äußeren des Glasofens hin im Bewegungsraum der Schlitze 5 liegt,
in Stellungen bewegt werden kann, in denen die Öffnung 2
nur noch teilweise oder aber überhaupt nicht mehr von der
Scheibe 3 abgedeckt ist.

Diese Relativbewegung der Scheibe 3 zur Öffnung 2 wird im
einfachsten Fall dadurch erreicht, daß die Scheibe 3 sowie
deren Antriebsmechanismus (Elektromotor) an einem Ende
eines Hebelarmes 6 angeordnet sind, der an seinem anderen
Ende bei 7 an der Begrenzungswandung 1 oder an einem nicht
näher dargestellten ortsfesten Gestell in Richtung des
Pfeiles B der Figur 1 schwenkbar ist.

Um die Scheibe 3 in der die Öffnung 2 abdeckenden Stellung
gemäß den Fig. 1 und 2 zu halten, greift am Hebelarm 6 das
eine Ende einer Zugfeder 8 an, die mit ihrem anderen Ende
an der Begrenzungswandung 1 oder an einem nicht näher dargestellten ortsfesten Gestell gehaltert ist und die auf den
Hebelarm 6 um den Punkt 7 ein Drehmoment entgegen dem Pfeil
B ausübt und dadurch unter Verwendung nicht näher dargestellter, ortsfester Anschläge für den Hebelarm 6 diesen Hebelarm
zusammen mit der Scheibe 3 in einer Stellung hält, in der die
Scheibe 3 die Öffnung 2 abdeckt.

Mit Hilfe eines Gestänges 9, das einerseits mit dem Hebelarm 6
und andererseits mit einem Fußpedal 10 verbunden ist, kann
der Hebelarm 6 beim Schwenken des Fußpedales 10 in Richtung
des Pfeiles C um den Anlenkpunkt 11 des Fußpedales nach unten
geschwenkt werden, so daß die Scheibe 3 die Öffnung 2 des
Glasschmelzofens mehr oder weniger freigibt.

Es sind selbstverständlich auch andere Mittel denkbar, mit
denen der Scheibenmittelpunkt 4 relativ zur Öffnung 2 bewegt
werden kann, z.B. ist es möglich, zum Schwenken des Hebelarmes 6 hydraulische oder pneumatische Steuermittel zu verwenden und/oder die Scheibe 3 zusammen mit ihren Antriebsmitteln unter Verwendung einer anderen, nicht von einem Hebelarm 6 gebildeten Führung relativ zur Begrenzungswand 1 des
Glasschmelzofens zu bewegen.

0023522

Insbesondere bei Verwendung von hydraulischen, pneumatischen oder elektrischen Steuermitteln zum Bewegen des Scheibenmittelpunkts 4 relativ zur Öffnung 2 ist es möglich, die Steuereinrichtung so auszulegen, daß entsprechend den Fig. 3a-3c drei unterschiedliche Stellungen für die Scheibe 3 möglich sind, und zwar eine erste Stellung (Fig. 3a), in der die Scheibe 3 die Öffnung 2 vollständig abdeckt, eine zweite Stellung (Fig. 3b), in der die Scheibe nur einen Teil der Öffnung 2 abdeckt, sowie eine dritte Stellung (Fig. 3c), in der die Öffnung 2 vollständig von der Scheibe 3 freigegeben ist.

Die Steuerung erfolgt dann in der Weise, daß beim Einführen eines Werkzeuges (z.B. Glasblaspfeife) durch die Öffnung 2 in den Glasschmelzofen die Scheibe 3 zunächst aus der die Öffnung 2 verschließenden Stellung gemäß Fig. 3a in die die Öffnung vollständig freigebendeStellung 3c übergeführt und dann mit kleiner Verzögerung selbsttätig in die die Öffnung 2 nur teilweise verschließende Stellung gemäß Fig. 3b zurückkehrt. Hierdurch ist es möglich, die Glasblaspfeife bzw. das Werkzeug bei vollständig freigegebener Öffnung 2 (Fig. 3c) einzuführen und dieses Werkzeug dann bei teilweise abgedeckter Öffnung 2 (Fig. 3b) in der Öffnung 2 zu belassen. Zum Herausnehmen des Werkzeugs bzw. der Glasblaspfeife aus dem Glasschmelzofen ist dann die Steuerung so getroffen, daß beim erneuten Betätigen eines Betätigungsknopfes oder einer anderen Handhabe die Scheibe 3 aus der in der Fig. 3b gezeigten Stellung in die die Öffnung 2 vollständig freigebende Stellung gemäß Fig. 3c geschwenkt wird und dann selbsttätig mit einer etwas größeren Verzögerung in die die Öffnung 2 vollständig abdeckende Stellung gemäß Fig. 3a zurückkehrt.

Die bei rotierender Scheibe 3 erzielte Verminderung an Wärmestrahlung, die aus der Öffnung 2 des Glasschmelzofens austritt, ist eine Funktion der Anzahl der Schlitze 5, der Breite dieser Schlitze sowie der Drehgeschwindigkeit der Scheibe 3 um den Mittelpunkt 4. Bei Verwendung von zwei Schlitzen 5 wird beispielsweise eine Drehgeschwindigkeit von 25 Umdrehungen pro Sekunde für die Scheibe 3 verwendet. Dies hat bei einer entsprechenden Breite der Schlitze 5, z.B. bei Schlitzen 5 mit einer maximalen Breite von 5 mm, nicht nur eine starke Verringerung der aus der Öffnung 2 austretenden Wärmestrahlung zur Folge, sondern bei zwei Schlitzen und einer Umdrehungsgeschwindigkeit von 25 Umdrehungen pro Sekunde wird auch ein Flimmern vollständig vermieden, so daß es möglich ist, die Schmelze im Glasofen durch die sich über die Öffnung 2 bewegenden Schlitze 5 zu beobachten.

Trotz der erheblichen Wärmestrahlung, die von der im Glasschmelzofen vorhandenen Glasschmelze ausgeht, ist es möglich, die Scheibe 3 aus Metallblech herzustellen, da durch die relativ hohe Umdrehungsgeschwindigkeit der Scheibe ein Kühlluftstrom erzeugt wird, der eine ausreichende Kühlung dieser Scheibe sicherstellt und somit verhindert, daß diese Scheibe auf übermäßig hohe Temperaturen aufgeheizt wird.

Die Erfindung wurde voranstehend an einem Ausführungsbeispiel beschrieben. Es versteht sich, daß Abwandlungen sowie Änderungen hiervon möglich sind, ohne daß dadurch der der Erfindung zugrundeliegende Erfindungsgedanke verlassen wird. So ist es beispielsweise auch möglich, nur einen einzigen oder aber mehr als zwei Schlitze 5 zu verwenden. Weiterhin ist es auch möglich, Mittel vorzusehen, mit denen die Rotationsgeschwindigkeit der Scheibe 3 eingestellt bzw. verändert werden kann, oder aber Mittel vorzusehen, mit denen die Breite der verwendeten Schlitze bzw. deren Länge den jeweiligen Verhältnissen bzw. der jeweils gewünschten Reduzierung der austretenden Wärmestrahlung entsprechend eingestellt werden können.

Weiterhin kann es bei der Erfindung aus Gründen des Unfallschutzes zweckmäßig sein, die rotierende Scheibe 3 zumindest an ihrem Umfang und an ihrer der Begrenzungswandung 1 abgewandten Oberflächenseite durch eine ortsfeste Abdeckhaube abzudecken, in der dann ein der Öffnung 2 entsprechendes Fenster vorgesehen ist.

- 1 -     0023522

Patentansprüche:

1. Wärmestrahlungsschutz für Arbeitsöffnungen von Schmelzöfen, insbesondere von Glasschmelzöfen, gekennzeichnet
durch wenigstens eine vor einer Arbeitsöffnung angeordnete in Rotation versetzbare Scheibe (3), die wenigstens
eine Öffnung (5)aufweist, welche sich beim Rotieren der
Scheibe an der Arbeitsöffnung (2) vorbeibewegt.

2. Wärmestrahlungsschutz nach Anspruch 1, dadurch gekennzeichnet, daß die Öffnung ein sich in radialer Richtung
der Scheibe erstreckender Schlitz (5) ist.

3. Wärmestrahlungsschutz nach Anspruch 2, dadurch gekennzeichnet, daß sich der Schlitz vom Mittelpunkt (4) der
Scheibe (3) zum $R_a$nd der Scheibe (3) keilförmig erweitert

4. Wärmestrahlungsschutz nach einem der Ansprüche 1 bis 3,
dadurch gekennzeichnet, daß zwei Öffnungen (5) in der
Scheibe (3) um den Mittelpunkt (4) dieser Scheibe um
$180^{\circ}$ versetzt angeordnet sind.

5. Wärmestrahlungsschutz nach einem der Ansprüche 2 bis 4,
dadurch gekennzeichnet, daß bei Ausbildung der Öffnung
als Schlitz (5) die maximale Breite des Schlitzes 5 mm
beträgt.

6. Wärmestrahlungsschutz nach einem der Ansprüche 2 bis 5,
dadurch gekennzeichnet, daß bei Ausbildung der Öffnung
der Scheibe (3) als Schlitz (5) sich dieser Schlitz
nahezu über den gesamten Radius der Scheibe (3) erstreckt.

7. Wärmestrahlungsschutz nach einem der Ansprüche 1 bis 6,
dadurch gekennzeichnet, daß die Scheibe (3) einen Durchmesser von 400 mm aufweist.

8. Wärmestrahlungsschutz nach einem der Ansprüche 1 bis 7,
dadurch gekennzeichnet, daß die Scheibe (3) mit einer

- 2 -                    0023522

Geschwindigkeit von 25 U/sec angetrieben wird.

9. Wärmestrahlungsschutz nach einem der Ansprüche 1 bis 8, dadurch gekennzeichnet, daß die Scheibe (3) aus einer ersten Stellung, in der die Arbeitsöffnung (2) von der Scheibe (3) verdeckt ist, in wenigstens eine zweite Stellung bewegbar ist, in der die Arbeitsöffnung (2) vollständig von der Scheibe (3) freigegeben ist oder nur teilweise von der Scheibe (3) verdeckt ist.

10. Wärmestrahlungsschutz nach Anspruch 9, gekennzeichnet durch Führungs- und Steuermittel (6, 9, 10) mit denen die Scheibe (3) relativ zur Arbeitsöffnung (2) bewegbar ist.

11. Wärmestrahlungsschutz nach Anspruch 10, dadurch gekennzeichnet, daß die Führungs- und Steuermittel von einem Hebelarm (6) sowie von einem am Hebelarm angreifenden Gestänge (9), welches mit einer Handhabe, vorzugsweise mit einem Fußhebel (10) zusammenwirkt, gebildet sind, wobei der Hebelarm (6) an einem Ende schwenkbar an einem ortsfesten Teil gelagert ist und am anderen Ende die Lager- bzw. Antriebselemente für die Scheibe (3) aufweist.

12. Wärmestrahlungsschutz nach Anspruch 10, dadurch gekennzeichnet, daß die Führungs- und Steuermittel so ausgebildet sind, daß die Scheibe (3) aus ihrer die Arbeitsöffnung (2) vollständig abdeckenden Stellung beim Einführen eines Werkzeuges in die Arbeitsöffnung zunächst in eine die Arbeitsöffnung völlig freigebende Stellung und im Anschluß daran mit kleiner Verzögerung in eine die Arbeitsöffnung (2) teilweise abdeckende Stellung geschwenkt wird, und daß zum Herausnehmen des Werkzeugs aus der Arbeitsöffnung (2) die Scheibe (3) aus ihrer die Arbeitsöffnung (2) teilweise abdeckenden Stellung in die die Arbeitsöffnung (2) völlig freigebende Stellung geschwenkt wird und dann mit größerer Verzögerung in die die Arbeitsöffnung (2) vollständig abdeckende Stellung selbsttätig zurückkehrt.

0023522

Fig.1

Fig.2

I-I

Fig.3

a

b

c

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - C - 148 653 (SCHAUM)<br>* Ganzes Patentschrift *<br>-- | 1 | C 03 B 5/06<br>5/42<br>9/02 |
| | SU - A - 445 624 (VAAS)<br>* Ganzes Patentschrift *<br>-- | 1 | |
| A | US - A - 1 360 587 (SAID)<br>* Ganzes Patentschrift *<br>-- | 1 | |
| A | DE - C - 115 636 (BECKER)<br>* Ganzes Patentschrift *<br>-- | 1 | RECHERCHIERTE SACHGEBIETE (Int. Cl. 3)<br><br>C 03 B 5/42<br>5/06<br>9/02<br>5/04 |
| A | FR - A - 418 482 (BOURDU)<br>* Ganzes Patentschrift *<br>---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-10-1979 | V.D. BOSSCHE |

EPA form 1503.1  06.78